(19) **Europäisches Patentamt / European Patent Office / Office européen des brevets**

(11) **EP 4 707 844 A1**

(12) # EUROPEAN PATENT APPLICATION

(43) Date of publication:
**11.03.2026  Bulletin 2026/11**

(21) Application number: **25185888.2**

(22) Date of filing: **27.06.2025**

(51) International Patent Classification (IPC):
**G01S 3/04** *(2006.01)*    **G01S 5/02** *(2010.01)*
**G01S 5/04** *(2006.01)*

(52) Cooperative Patent Classification (CPC):
**G01S 5/0249; G01S 3/043; G01S 5/02585;**
**G01S 5/04;** G01S 5/02; G01S 5/02213;
G01S 2205/03; G01S 2205/07

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:   **04.09.2024   US 202418824057**

(71) Applicant: **Harris Global Communications, Inc.**
**Albany, NY 12207 (US)**

(72) Inventors:
• **BUDUSON, James**
  **North Chili, 14514 (US)**
• **HOOD, James J.**
  **Victor, 14564 (US)**
• **BURKE, Peter**
  **Hilton, 14468 (US)**

(74) Representative: **Schmidt, Steffen J.**
**Wuesthoff & Wuesthoff**
**Patentanwälte und Rechtsanwalt PartG mbB**
**Schweigerstrasse 2**
**81541 München (DE)**

(54) **RESILIENT DIRECTION FINDER AND GEOLOCATION DEVICE**

(57)    Systems and methods for operating a direction finder device. The methods comprise: mechanically steering an antenna system of a first platform at a first time such that a null of a first antenna pattern points in a first null direction towards an interference source; obtaining a first location of the first platform at the first time; mechanically steering the antenna system of the first platform at a second time such that the null of the first antenna pattern points in a second null direction towards the interference source (wherein the second direction is different than the first direction); obtaining a second location of the first platform at the second time, wherein the second location is different than the first location; and using the first location, the second location, the first null direction and the second null direction to determine a first estimated location of the interference source.

EP 4 707 844 A1

**Description**

BACKGROUND

Remotely controlled unmanned vehicles include airborne, land and water vehicles. Unmanned airborne vehicles (UAVs) are commonly referred to as drones. An operator uses radio frequency (RF) signals to remotely control an unmanned vehicle. In some cases, the unmanned vehicle may have reduced signal reception due to its operating environment.

Reduced signal reception may be caused by an RF interference source within the operating environment of the unmanned vehicle. The RF interference source may be intentional or unintentional. Intentional RF interference may be from an RF jammer, for example. In this case, the RF jammer operates within the same frequency band as an RF receiver being carried by the unmanned vehicle. Unintentional RF interference may be from RF transmitters operating in close proximity to the unmanned vehicle.

SUMMARY

This document concerns implementing systems and methods for operating a direction finder device. The methods comprise: mechanically steering an antenna system of a first platform at a first time such that a null of a first antenna pattern points in a first null direction towards an interference source; obtaining a first location of the first platform at the first time; mechanically steering the antenna system of the first platform at a second time such that the null of the first antenna pattern points in a second null direction towards the interference source, wherein the second direction is different than the first direction; obtaining a second location of the first platform at the second time, wherein the second location is different than the first location; and using the first location, the second location, the first null direction and the second null direction to determine a first estimated location of the interference source.

This document concerns a direction finder device. The direction finder device comprises: a platform with an antenna system; and an electronic circuit disposed on or in the platform that is configured to: mechanically steer the antenna system at a first time such that a null of a first antenna pattern points in a first null direction towards an interference source; obtain a first location of the platform at the first time; mechanically steer the antenna system at a second time such that the null of the first antenna pattern points in a second null direction towards the interference source (wherein the second direction is different than the first direction); obtain a second location of the platform at the second time, wherein the second location is different than the first location; and use the first location, the second location, the first null direction and the second null direction to determine a first estimated location of the interference source.

This document concerns an aerial vehicle. The aerial vehicle comprises: a fuselage; and avionic electronics that are disposed in the fuselage and comprise an electronic circuit configured to: control a mechanical steering of a null of a first antenna pattern at a first time to point in a first null direction towards an interference source; obtain a first location of the aerial vehicle at the first time; control a mechanical steering of the null of the first antenna pattern at a second time to point in a second null direction towards the interference source, wherein the second direction is different than the first direction; obtain a second location of the aerial vehicle at the second time, wherein the second location is different than the first location; and use the first location, the second location, the first null direction and the second null direction to determine a first estimated location of the interference source.

BRIEF DESCRIPTION OF THE DRAWINGS

This disclosure is facilitated by reference to the following drawing figures, in which like numerals represent like items throughout the figures.

FIG. 1 provides an illustration of a system implementing the present solution.

FIG. 2 provides an illustration of the aerial vehicle shown in FIG. 1.

FIG. 3 provides an illustration of electronic components and/or circuits of the aerial vehicle shown in FIGS. 1-2.

FIG. 4 provides a block diagram of a mobile platform comprising an RF device with a rotatable base on which antennas are disposed for steering nulls in different directions.

FIGS. 5-6 provide illustrations that are useful for understanding a radiation pattern and a null steering capability of the RF device shown in FIG. 4.

FIGS. 7-8 each provides a graph showing an antenna pattern.

FIG. 9 provide a block diagram of an illustrative architecture for the RF device of FIG. 4.

FIG. 10 provides a block diagram of another mobile platform comprising an RF device with a rotatable base on which antennas are disposed for steering nulls in different directions.

FIGS. 11-12 provide illustrations that are useful for understanding a radiation pattern and a null steering capability of the RF device shown in FIG. 10.

FIG. 13 provide a block diagram of an illustrative architecture for the RF device of FIG. 10.

FIG. 14 provides an illustration that is useful for understanding how to estimate a location of an interference source in accordance with the present solution.

FIGS. 15A-15F (collectively referred to herein as "FIG. 15") provide illustrations that are useful for understanding a triangulation based algorithm.

FIG. 16 provides an illustration that is useful for understanding how to estimate a location of an interference source in accordance with the present solution.

FIG. 17 provides a graph showing a normal distribution curve for determining weights to be assigned to an estimated location of an interference source.

FIG. 18 provides an illustration showing (i) a weighted estimated jammer location relative to the actual jammer location and (ii) an unweighted estimated jammer location relative to the actual jammer location.

FIGS. 19A-19B (collectively referred to as "FIG. 19") provide a flow diagram of an illustrative method for operating a moving platform.

FIG. 20 provides a block diagram of an illustrative computing device.

DETAILED DESCRIPTION

UAVs may be configured to prosecute missions in low-to-medium altitude airspace in an RF contested environment. The low-to-medium altitude airspace may be up to, for example, 100 meters. Telecommunication payloads often require the use of frequency hopping waveforms to conduct their mission. Traditional phase arrays lose their beam steering benefit with wide frequency hopping.

An electronic support-measure (ESM) may be integrated with a communications link to provide the end user with relevant situation awareness in the contested environment. ESM comprises anything that gives situational awareness in an environment. ESM capabilities can be added to a lightweight smart antenna that would compliment waveforms to increase resilience of the communication system.

Lightweight RF direction finders and lightweight beam steerers exist. For example, the following conventional solutions exist independent of the communications link: a pseudo Doppler shift directions finder; a corelated interferometer; and a Watson watt finder. Signal based threat warning (SBTW) waveform adds into communication devices that gives ESM capability but no electronic counter counter-measures (ECCM) capability (i.e., no communication resiliency is added onto the waveform). The beam steering is another solution that is integrated into a communication link. Beam steering has limited bandwidth communication resiliency.

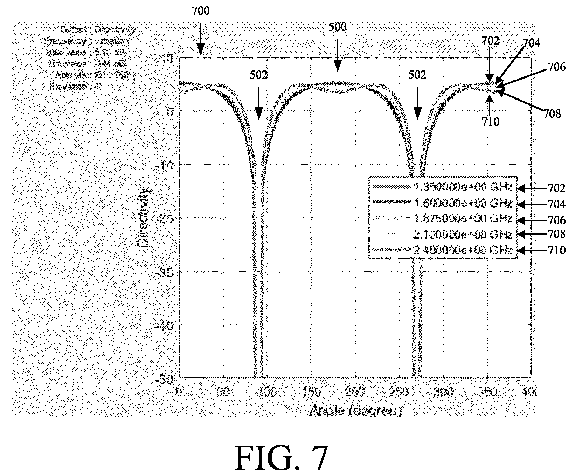

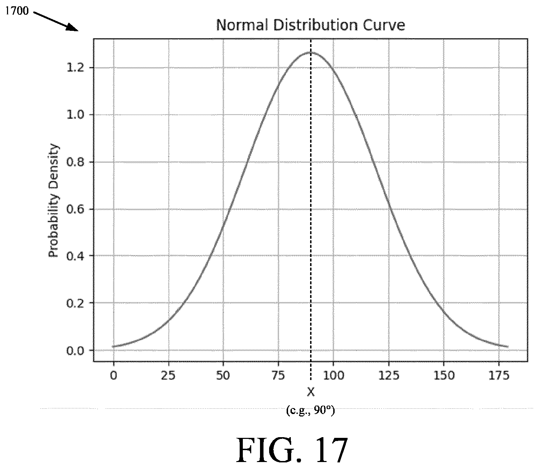

There are no lightweight communication resilient direction finders. The present solution provides a lightweight communication resilient direction finder and geolocation device that overcomes the drawbacks of the conventional solutions. The present device utilizes a static null across a wide bandwidth that forms an antenna pattern similar to that shown in the graph **700** of FIG. 7. As shown in FIG. 7, a deep and thin null is provided at a same spot across the wide frequency range. Stated differently, the null is pointing in the same direction relative to the antennas regardless of frequency due to the manner in which the antennas are phase shifted. This is not the case in conventional communication systems where an angle of the null changes with frequency. The direction in which the null points can be determined using an inertial measurement unit (IMU) added to the rotatable base of the antenna system. This allows an ECCM capability of one or more communication devices to be utilized. The ECCM capability mitigates signal jamming by mechanically steering or pointing the null in the direction towards an interference source. Thus, a database can be built of where the null is pointing at different times and at different locations. From the null directions, a moving array is built by, for example, using the GPS coordinates of the locations to triangulate the location of where the strongest interference source is located. A weighted average is computed for a plurality of triangulated locations. The weighted average represents an estimated position or location of the interference source. The locations may be weighted on (i) a normal distribution code based off the delta between the angles of two points, (ii) a linear scale, (iii) a logarithmic scale, and/or (iv) a piecewise scale. A piecewise function could be used in place of a normal distribution curve. The functions within the piecewise function could include, but are not limited to, linear, logarithmic, and/or exponential. An illustrative normal distribution code is shown in the graph **1700** of FIG. 17. This weighted approach requires relatively low computing power to provide an accurate estimate of the interference source's location.

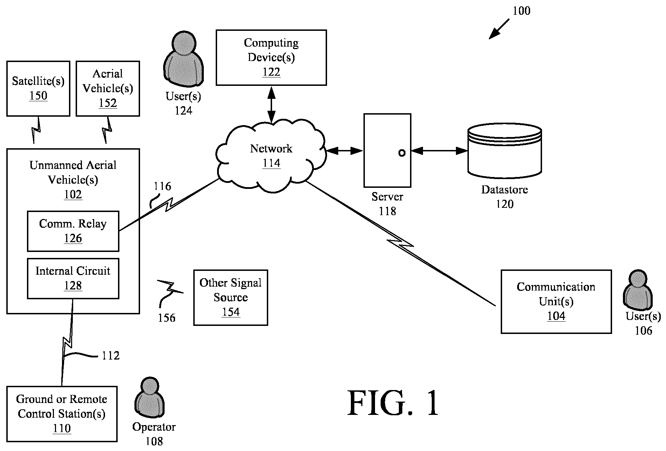

Referring now to FIG. 1, there is provided an illustration of a system **100** implementing the present solution. System **100** comprises aerial vehicles **102, 152,** satellite(s) **150,** communication device(s) **104, 122,** ground control station(s) **110,** and/or a server **118.** The aerial vehicles **102, 152** may or may not have onboard human pilots, crew members and/or passengers, or a form of autonomous operation. Each aerial vehicle **102, 152** can include, but is not limited to, an autonomous aerial vehicle, a remotely-piloted aerial vehicle, a UAV, a drone, and/or a manned aerial vehicle.

In the remotely-piloted scenarios, an operator **108** (e.g., a Remote Pilot In Command (RPIC)) can remotely control flight operations of the aerial vehicle by using ground control station **110** that is communicatively coupled to an internal circuit **128** of the aerial vehicle **102, 152** via command and control links **112.** The internal circuit **128** includes the avionics payload. The avionics payload comprises avionic electronics, i.e., hardware and/or software facilitating positioning, navigation, timing and other functionalities of the aerial vehicle. The aerial vehicle can have any classification (e.g., a Group 1-5 classification, and/or size classification (e.g., very small, small, medium, and/or large).

Navigation of the aerial vehicle can be facilitated by satellite(s) **150.** In this regard, the avionic electronics can include a locator configured to periodically or continuously determine the location of the aerial vehicle using satellite signals (e.g., GPS signals). The location may be reported to external devices such as other aerial vehicle(s) **152,** ground control station **110** and/or server **118.**

During flight, the aerial vehicle **102** can act as an airborne relay to wirelessly connect to communication unit(s) **104** (e.g., terrestrial radios) located on the ground at locations in which wireless communications therefrom are masked or screened by the LoS obstructions (e.g., distance, terrain (e.g., foliage and mountains) and human made objects (e.g., buildings)). In this regard, a communications relay **126** is provided with the aerial vehicle. The communications relay **126** may communicate over a secure communications link **116** (e.g., a Small Secure Data Link (SSDL)), use various frequency bands (e.g., Ultra High Frequency (UHF) and Very Hight Frequency (VHF) bands), support a variety of frequencies and waveforms, and extend the range between users **106** for voice and data communications (e.g., text messages and/or imagery data) beyond the LoS range of the communication unit(s) **104.** The communication unit(s) **104** can include, but is(are) not limited to, radio transceiver(s), personal computer(s), portable computer(s), desktop computer(s), smart device(s) (e.g., a smart phone), tablet(s), and/or wearable device(s) (e.g., a smart watch and/or smart goggles).

The voice and data communications may be provided to remote devices such as computing device(s) **122** and/or server(s) **118** via network **114.** Network **114** can include, but is not limited to, a radio network, a cellular network, and/or the Internet. The remote devices can process and/or output the voice and data communications to users **124** thereof. The voice communications, data communications and/or analytics relating thereto can be stored in a datastore **120.**

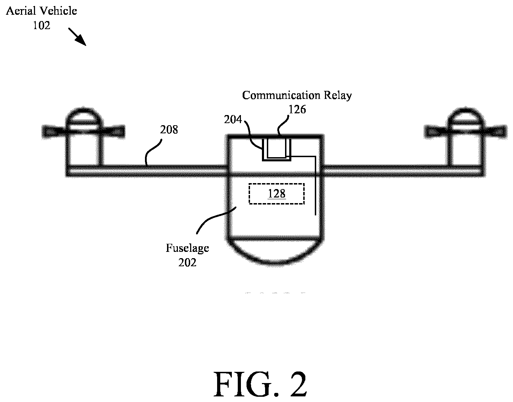

Referring now to FIG. 2, there is shown an illustrative architecture for the aerial vehicle **102** of FIG. 1. Aerial vehicle(s) **152** may be the same as or similar to aerial vehicle **102.** Thus, the discussion of aerial vehicle **102** is sufficient for understanding aerial vehicle(s) **152.**

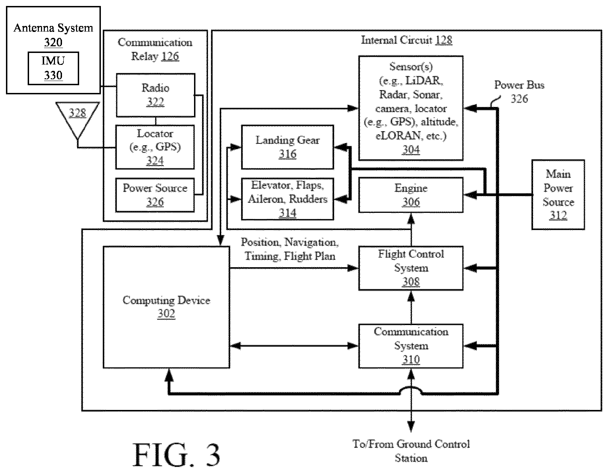

The internal circuit **128** is disposed inside the fuselage **202** of the aerial vehicle, and the communication relay **126** is disposed in an existing compartment **204** formed in the fuselage **202** of the aerial vehicle. The compartment **204** is accessible from the outside of the aircraft (e.g., via a door or removable panel). A more detailed block diagram of the internal circuit **128** and communication relay **126** is provided in FIG. 3.

As shown in FIG. 3, the internal circuit **128** comprises a computing device **302,** sensor(s) **304,** an engine **306,** a flight control system **308,** a communication system **310,** a power source **312,** a propulsion system **314,** and landing gear **316.** The internal circuit **128** can include more or less components than those shown and listed. The propulsion system can include, but is not limited to, elevators, flaps, ailerons and/or rudders.

The computing device **302** comprises processor(s) that execute(s) instructions to perform at least the following operations: receiving and processing Position, Navigation and Timing (PNT) data from the sensor(s) **304;** and/or facilitating flight operations by providing the PNT data and/or a flight plan to the flight control system **308** and/or the ground control station via communication system **310.** The PNT data ensures that the operator and/or the aerial vehicle knows the aerial vehicle's current position at any given time. The flight plan ensures that the aerial vehicle knows its destination relative to its current position which is useful especially in autonomous aircraft applications.

The sensor(s) **304** can include, but are not limited to, a LiDAR system, a radar system, a sonar system, a camera, a locator (e.g., GPS device), an altitude sensor, and/or an eLORAN device. It should be noted that the locator of internal circuit **128** does provide information that facilitate the operator's **108** in determining the location of the aerial vehicle.

The communication system **310** provides a means to transmit PNT data and/or other information to the ground control station, and to receive command and control information from the ground control station. The command and control information is passed from the communication system **310** to the computing device **302** and/or the flight control system **308.** The flight control system **308** controls operations of the engine **306,** propulsion system **314,** and/or landing gear **316** in accordance with the commands and control information received from the ground control station.

The components **302-310, 314, 316** are supplied power from a main power source **312.** The main power source **312** can include, but is not limited to, a battery and/or an energy harvesting circuit (e.g., comprising a super capacitor to store harvested energy from heat, wind, light, RF signals, etc.). The power is supplied from the main power source **312** to components **302-310** via a power bus **326.**

The communication relay **126** is independent from the internal circuit **128** and consists of a standalone payload for the aerial vehicle. The communication relay **126** may be supplied power from the main power source **312** of the aerial vehicle via power bus **326.** Additionally or alternatively, the communication relay **126** is provided with another power source **326.** Power source **326** can include, but is not limited to, a battery (e.g., a Lithium Polymer (LiPo) battery) and/or an energy harvesting circuit. Such a power source arrangement ensures that the components **322, 324** of the communication relay **126** continue to operate when the internal circuit **128** is no longer being supplied power from the main power source **312.** The components include a radio **322** and a locator **324.** The locator **324** can include, but is not limited to, a GPS device. Notably, the locator **324** provides a means to allow all users **106, 124** in a communication relay link to know the location of the aerial vehicle at any given time, and therefore provides these users with situational awareness (SA) information. An antenna **328** is provided for the locator **324.**

An antenna system **320** is provided for the radio **322.** Antenna system **320** comprises an inertial measurement unit (IMU) **330** for determining or detecting a null direction for an antenna pattern at each of a plurality of times. The null directions are used by the computing device **302** to find a location of an interfering source (e.g., signal source **154** of FIG. 1) via a triangulation based algorithm. Locations of the aerial vehicle **102** (as determined by the locator **324** at the plurality of times) are also used to find the location of the interfering source via the triangulation based algorithm. The triangulation based algorithm will be described in detail below.

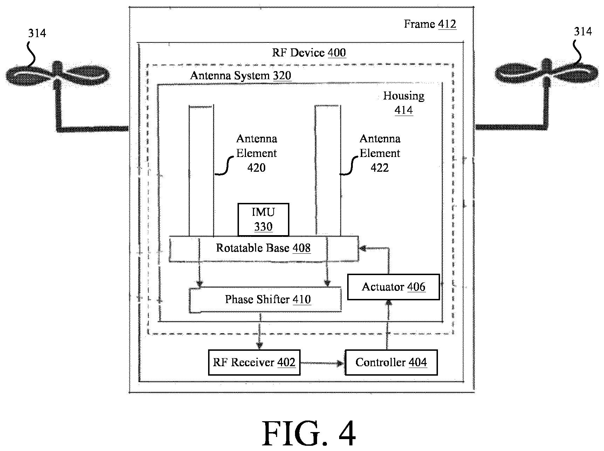

FIG. 4 shows an illustrative architecture that is useful for understanding the antenna system **320** of aerial vehicle **102.** As shown in FIG. 4, the aerial vehicle **102** includes a frame **412** carrying the propulsion system **314** which is configured to provide lift and maneuverability. The frame **412** may also be referred to as a chassis or fuselage. As such, frame **412** can be the same as or similar to fuselage **202** of FIG. 2. The propulsion system **314** may be based on one or more propeller blades, for example. The aerial vehicle **102** may operate in low-to-medium altitude airspace (e.g., up to 100 meters). The aerial vehicle **102** may be configured to operate on land or the water.

Control of the aerial vehicle **102** is facilitated by an RF device **400** receiving RF control signals **504** sent over control links **112** from the remote control station **110** controlled by the operator **108.** The RF device **400** includes the antenna system **320,** an RF receiver **402** and a controller **404.** The RF receiver **402** may be included in the radio **322** of FIG. 3. The controller **404** may be implemented by the computing device **302** of FIG. 3. The RF device **400** may also include a transmitter to communicate with the remote control station **110.** The transmitter is not shown simply for ease of illustration.

The RF device **400** should have good reception of the RF control signals **504** to ensure control of the aerial vehicle **102.** If an RF interference source (e.g., signal source **154** of FIG. 1) within the operating environment of the aerial vehicle **102** is transmitting RF interference signals over a communications link (e.g., link **156** of FIG. 1), then these signals may disrupt control of the aerial vehicle **102.** If control of the aerial vehicle **102** is disrupted or lost, then the aerial vehicle **102** may not complete its intended goal or mission.

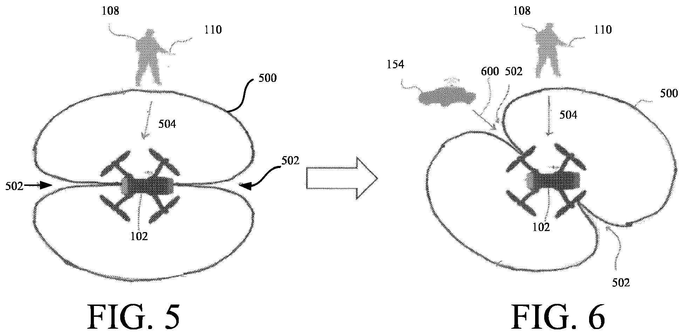

The antenna system **320** comprises a housing **414** on and/or in which antenna elements **420, 422,** a rotatable base **408,** a phase shifter **410** and an actuator **406** are disposed. The IMU **330** is disposed on and/or coupled to the rotatable base **408.** The actuator **406** is configured to selectively rotate the base **408.** The antenna elements **420, 422** are spaced apart and coupled to the base **408** such that they rotate along with the base **408.** The IMU **330** also rotates with the base **408** since it is coupled to a rotating component thereof. The rotating component can include a motor, a gear, a shaft, etc. The phase shifter **410** is coupled to the antenna elements **420, 422** to define an antenna pattern having a pair of opposing nulls. An illustration of an antenna pattern is provided in FIGS. 5-6.

As shown in FIGS. 5-6, the pair of opposing nulls **502** in the antenna pattern **500** may be one hundred eighty degrees apart. The controller **404** is configured to drive the actuator **406** to steer the antenna pattern **500** in accordance with the RF control signals **504** received by the RF receiver **402.** The received RF control signals **504** may be passed from the RF receiver **402** to the controller **404** to determine received signal strengths of the RF control signals **504.** The controller **404** may then steer the antenna pattern **500** based on the determined received signal strengths.

For example, the controller may steer the antenna pattern **500** so that one of the nulls **502** is directed toward an RF interference source. The RF interference source can include, but is not limited to, signal source **154** of FIG. 1. This allows the antenna system **320** to be resilient in the presence of the RF interference source **154** without changing orientation or a direction of travel of the aerial vehicle **102.**

The antenna elements **420, 422** may include, but are not limited to, loop antennas, horn antennas, patch antennas, helical antennas, monopole antennas, and/or dipole antennas. For discussion purposes, the antenna elements **420, 422** are configured as dipole antenna elements. Spacing between the antenna elements **420, 422** may be in a range of 0.1 - 0.7 wavelength of the operating frequency of the RF device **400**. The wavelength may be determined based on a highest operating frequency of the RF device **400**.

The RF device **400** is not limited to a particular frequency band. The operating frequency may be, for example, within 0.3 - 3.0 GHz. For discussion purposes, the dipole antenna elements **420, 422** are sized to operate between 1.35 - 2.4 GHz. In this configuration, the dipole antenna elements **420, 422** are about 5 inches in height with a spacing of about 2.5 inches therebetween. This corresponds to the antenna system **320** having a height of about 6 inches and a diameter of about 3.5 inches, with a weight being less than 16 ounces. This allows the antenna system **320** to be small, lightweight and low cost.

The antenna system **320** operates as a linear array while the dipole antenna elements **420, 422** are combined 180 degrees out of phase from one another. This causes the antenna pattern **500** to be circular-shaped with the pair of opposing nulls **502**. The phase shifter **410** may include at least one discrete component so that the dipole antenna elements **420, 422** are combined 180 degrees out of phase from one another. Alternatively, the phase shifter 68 may include a pair of coaxial or stripline type feeds coupled to respective dipole antenna elements **420, 422** in a reverse configuration so that the dipole antenna elements **420, 422** are combined 180 degrees out of phase from one another. For the coaxial feeds, each coaxial cable may have a center conductor and an outer conductor. The center and outer conductors of one of the coaxial cables for one of the dipole antenna elements may be connected opposite of how the center and outer conductors of the other coaxial cable are connected to the other dipole antenna element.

The antenna system **320** may also be configured to operate with one dipole antenna element **420, 422** by switching out the other dipole antenna element **420, 422**. Operation with a single dipole antenna element **420, 422** generates an omni-directional antenna pattern without any nulls. The omni-directional antenna pattern may be used when the signal strength of received RF signals is above a threshold. This may indicate that the RF signals received by the RF receiver **402** are not being degraded by the RF interference source **154**.

If RF interference signals **600** from the RF interference source **154** are not being detected by the RF device **400**, then the antenna pattern **500** may be positioned by the controller **404** so that the pair of nulls **502** is directed away from the operator **108**, as shown in FIG. 5. However, if the RF interference signals **600** are being detected by the RF device **400**, then the antenna pattern **500** is positioned by the controller **404** so that one of the nulls **502** is directed towards the RF interference source **154**, as shown in FIG. 6.

As the antenna pattern **500** is steered by the controller **404**, orientation of the frame **412** via the propulsion arrangement **314** may remain the same. This allows the RF interference signals **600** to be mitigated without having to change a flight path of the aerial vehicle **102**.

An advantage of the antenna system **320** having an antenna pattern **70** with a pair of opposing nulls **502** is that the nulls are aligned over an operating frequency range of the RF device **400**, as shown by graph **700** in FIG. 7. This corresponds to the pair of antenna elements **420, 422** being combined out-of-phase, as noted above. The operating frequency of the RF device **400** may vary between 1.35 GHz to 2.4 GHz, for example. In graph **700**, line **702** corresponds to the antenna pattern **500** at 1.35 GHz. Line **704** corresponds to the antenna pattern **500** at 1.60 GHz. Line **706** corresponds to the antenna pattern **500** at to 1.875 GHz. Line **708** corresponds to the antenna pattern **500** at 2.10 GHz. Line **710** corresponds to the antenna pattern **500** at 2.40 GHz. The respective antenna patterns corresponding to lines **702-710** basically overlap one another. Consequently, the nulls **502** remain consistent or aligned across a wide frequency band. This allows the RF receiver **402** to receive fixed frequency or frequency hopping RF control signals **504** while mitigating interference from an RF interference source **154**.

To provide further resiliency in the presence of an RF interference source, the RF receiver **402** may include, but is not limited to, a spread spectrum receiver, a frequency-hopping spread spectrum (FHSS) receiver configured to receive RF control signals 42 that are spread over a wide range of frequencies using frequency hopping, a direct sequence spread spectrum (DSSS) receiver configured to receive RF control signals that are spread over a wide range of frequencies using a code, and/or an orthogonal frequency-division multiplexing (OFDM) receiver configured to receive RF control signals that are based on closely spaced narrowband subchannel frequencies instead of a single wideband channel frequency.

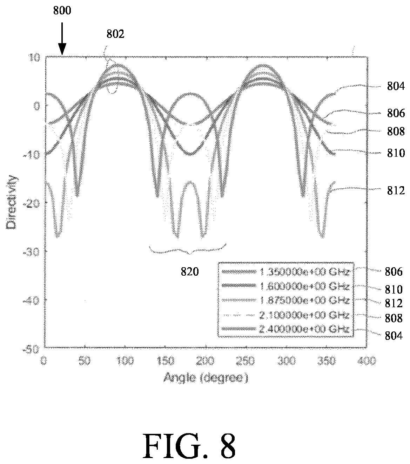

For comparison purposes, reference is directed to graph **800** in FIG. 8 where the antenna patterns **802** have nulls **820** that do not remain aligned over the same frequency range of 1.35 GHz to 2.4 GHz. Instead, the nulls **820** move around based on a particular operating frequency. This corresponds to traditional beam steering where the dipole antenna elements are not combined out-of-phase.

In graph **800**, line **806** corresponds to the antenna pattern **802** at 1.35 GHz. Line 810 corresponds to the antenna pattern **802** at 1.60 GHz. Line 812 corresponds to the antenna pattern **802** at to 1.875 GHz. Line **808** corresponds to the antenna pattern **802** at 2.10 GHz. Line **804** corresponds to the antenna pattern **802** at 2.40 GHz. With the nulls **820** changing at different frequencies, this makes it more difficult to operate with a frequency hopping or spread spectrum receiver. It would be difficult to point a null **820** of the antenna pattern **802** toward an RF interference source at a particular frequency and then try to point the moving null **820** toward the RF interference source at a different frequency.

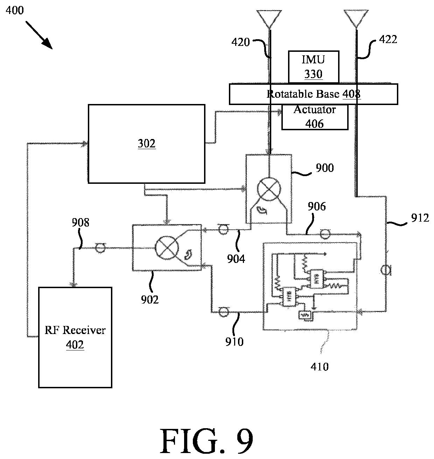

FIG. 9 provides a more detailed block diagram of the RF device **400.** The RF device **400** includes a pair of RF switches **900** and **902** that are controlled by the controller **302.** The RF switches **900, 902** are controlled so that the RF device **400** will operate with both of the dipole antenna elements **420, 422** or operate with just one of the dipole antenna elements **420 or 422.**

Operation with a single dipole antenna element **420** generates an omni-directional antenna pattern without any nulls. The omni-directional antenna pattern may be used when the strength of received RF signals is above a threshold. In this case, RF switch **900** is switched so that coaxial cable **904** is connected to dipole antenna element **420.** Consequently, coaxial cable **906** is not connected to dipole antenna element **420.** RF switch **902** is switched so that coaxial cable **904** is connected with coaxial cable **908,** which is connected to the RF receiver **402.** Coaxial cable **910** from the phase shifter **410** is not connected to coaxial cable **908.**

If the strength of received RF signals falls below a threshold, the controller **302** controls the RF switches **900, 902** so that the RF device **400** operates with both of the dipole antenna elements **420, 422.** An RF interference source may be causing the RF signals to fall below the threshold, for example.

The controller **302** controls RF switch **900** so that coaxial cable **906** is connected to dipole antenna element **420** instead of coaxial cable **904.** The phase shifter **410** now receives RF signals from dipole antenna element **420.** The phase shifter **410** also receives RF signals from dipole antenna element **422** via coaxial cable **912.** The phase shifter **410** may include one or more discrete components, for example. The controller **302** controls RF switch **902** so that coaxial cable **910** is connected with coaxial cable **908,** which is still connected to the RF receiver **402.**

The controller **302** is connected to the RF receiver **402** to determine strength of the received RF signals. A value of the received signal strength may be determined as a signal-to-noise ratio (SNR) or as a received signal strength indicator (RSSI). Based on the strength of the received RF signals, the RF device **400** will control the RF switches **900, 902** accordingly.

Initial operation of the RF device **400** may be with dipole antenna element **420,** for example. If the signal strength of the received RF signals drops below an initial threshold, then the controller **302** controls the RF switches **900, 902** so that the RF device **400** is operating with both of the dipole antenna elements **420, 422.**

The controller **302** may then apply a control loop to mechanically sweep the antenna pattern **500** so that one of the nulls **502** maintains being directed towards the RF interference source **154** causing the initial threshold drop. The controller **302** may be a proportional derivative (PD) controller, for example. An output of the PD controller varies in proportion to the error signal as well as with the derivative of the error signal. An advantage of the PD controller is to increase the stability of steering one of the nulls **502** of the antenna pattern **500** toward an RF interference source **154** by improving control since it has the ability to predict future errors.

Another aspect is directed to a method for operating the RF device **400** for the aerial vehicle **102** as described above. The method includes operating an RF receiver **402** coupled to the antenna system **320,** and operating a controller **404** to drive the actuator **406** to steer the antenna pattern **500** based upon RF signals received by the RF receiver **402.**

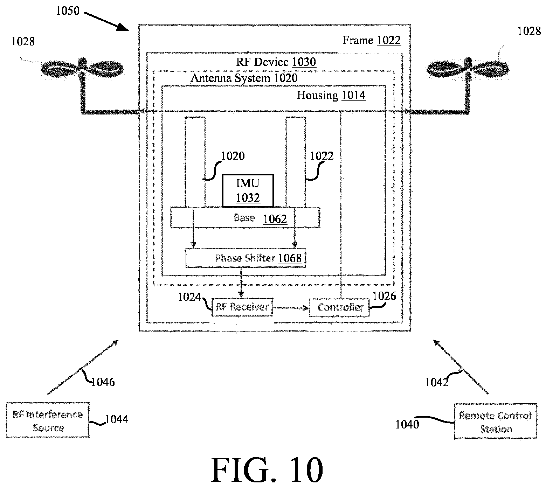

Referring now to FIGS. 10-12, another aspect of the present solution is directed to a vehicle **1050** carrying an RF device **1030.** The vehicle **1050** can include, but is not limited to, a UAV. Vehicle **1050** comprises a frame **1022** carrying a propulsion system **1028** to provide lift and maneuverability and to orient the frame **1022.** The frame **1022** may also be referred to as a chassis or fuselage. As such, frame **1022** can be the same as or similar to fuselage **202** of FIG. 2. The propulsion system **1028** may be based on one or more propeller blades, for example. Vehicle **1050** may operate in low-to-medium altitude airspace.

Control of the vehicle **1050** is based on the RF device **1030** receiving RF control signals **1042** from a remote control station **1040** controlled by an operator. The remote control station **1040** may be the same as or similar to remote control station **110** of FIG. 1, and the operator may be operation **108** of FIG. 1. The RF device **1024** needs to have good reception of the RF control signals **1042** to ensure control of the vehicle **1050.** If an RF interference source **1044** within the operating environment of the vehicle **1050** is transmitting RF interference signals **1046,** then these signals may disrupt control of the vehicle **1050.** If control of the vehicle **1050** is disrupted or lost, then the vehicle may not complete its intended goal or mission.

The RF device **1030** includes an antenna system **1020,** an RF receiver **1024** and a controller **1026.** The RF device **1030** may also include a transmitter to communicate with the remote control station **1040.** The antenna system **1020** includes a housing **1014,** a base **1062** carried by the housing, a pair of spaced apart antenna elements **1020, 1022** carried by the base, and a phase sifter **1068** coupled to the pair of antenna elements **1020, 1022** to define an antenna pattern **1100** having a pair of opposing nulls **1102.** The pair of opposing nulls **1102** in the antenna pattern **1100** may be 180 degrees apart.

Controller **1026** is configured to control the propulsion system **1028** to orient the frame **1022** to steer the antenna pattern **1100** based upon the RF receiver **1024.** RF signals received by the RF receiver **1024** may be provided to the controller **1026** to determine received signal strength of the RF signals. The controller **1026** may then orient the frame **1022** to steer the antenna pattern **1100** based up the determined received signal strengths. For example, the controller **1026** may orient the frame **1022** to steer the antenna pattern **1100** so that one of the nulls **1102** is directed toward an RF interference source **1044.** This allows the antenna system **1020** to be resilient in the presence of an RF interference source **1044** by changing orientation or a direction of travel of the vehicle **1050.**

The antenna elements **1020, 1022** may include, but are not limited to, loop antennas, horn antennas, patch antennas, helical antennas, monopole antennas or dipole antennas, for example. For discussion purposes, the antenna elements **1020, 1022** are configured as dipole antenna elements. Spacing between the antenna elements **1020, 1022** is in a range of 0.1 - 0.7 wavelength of the operating frequency of the RF device **1030.** The wavelength may be determined based on a highest operating frequency of the RF device **1030.**

The RF device **1030** is not limited to a particular frequency band. The operating frequency may be within 0.3 - 3.0 GHz, for example. For discussion purposes, the dipole antenna elements **1020, 1022** are sized to operate between 1.35 - 2.4 GHz. In this configuration, the dipole antenna elements **1020, 1022** are about 5 inches in height with a spacing of about 2.5 inches therebetween. This corresponds to the antenna system **1020** having a height of about 6 inches and a diameter of about 3.5 inches, with a weight being less than 16 ounces. This allows the antenna system **1020** to be small, lightweight and low cost.

The antenna system **1020** operates as a linear array while the dipole antenna elements **1020, 1022** are combined 180 degrees out of phase from one another. This causes the antenna pattern **1100** to be circular-shaped with the pair of opposing nulls **1102.** The phase shifter **1068** includes at least one discrete component so that the dipole antenna elements **1020, 1022** are combined 180 degrees out of phase from one another. Alternatively, the phase shifter **1068** may include a pair of coaxial or stripline type feeds coupled to respective dipole antenna elements **1020, 1022** in a reverse configuration so that the dipole antenna elements **1020, 1022** are combined 180 degrees out of phase from one another. For the coaxial feeds, each coaxial cable has a center conductor and an outer conductor. The center and outer conductors of one of the coaxial cables for one of the dipole antenna elements is connected opposite of how the center and outer conductors of the other coaxial cable are connected to the other dipole antenna element.

Antenna system **1020** may also be configured to operate with one dipole antenna element **1020, 1022** by switching out the other dipole antenna element **1020, 1022.** Operation with a single dipole antenna element **1020, 1022** generates an omni-directional antenna pattern without any nulls. The omni-directional antenna pattern may be used when the signal strength of received RF signals is above a threshold. This typically indicates that the RF signals received by the RF receiver are not being degraded by an RF interference source **1044.**

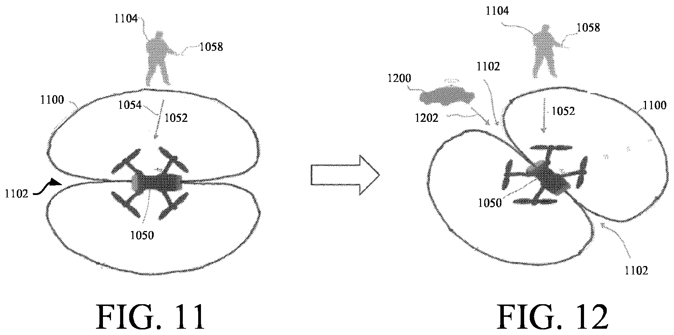

If RF interference signals **1046** from an RF interference source **1044** are not being detected by the RF device **1030,** then the antenna pattern **1100** may be positioned by orienting the frame **1022** so that the pair of nulls **1102** is directed away from the operator **1104,** as shown in FIG. 11. However, if RF interference signals **1046** are being detected by the RF device **1030,** then the frame **1022** is oriented so that one of the nulls **1102** is directed towards the RF interference source **1044,** as shown in FIG. 12. This allows the RF interference signals **1046** to be mitigated by changing orientation or a flight path of the vehicle **1050.**

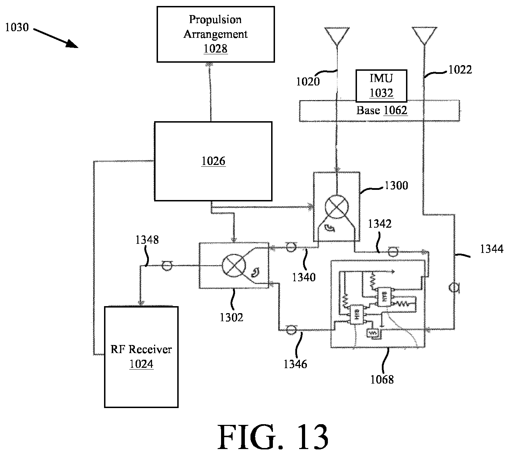

FIG. 13 provides a more detailed block diagram of the RF device **1030.** The RF device **1030** includes a pair of RF switches **1300** and **1302** that are controlled by the controller **1026.** The RF switches **1300, 1302** are controlled so that the RF device **1030** will operate with both of the dipole antenna elements **1020, 1022** or operate with just one of the dipole antenna elements **1020.**

Operation with a single dipole antenna element **1020** generates an omni-directional antenna pattern without any nulls. The omni-directional antenna pattern may be used when the strength of received RF signals is above a threshold. In this case, RF switch **1300** is switched so that coaxial cable **1340** is connected to dipole antenna element **1020.** Consequently, coaxial cable **1342** is not connected to dipole antenna element **1020.** RF switch **1302** is switched so that coaxial cable **1340** is connected with coaxial cable **1348,** which is connected to the RF receiver **1024.** Coaxial cable **1346** from the phase shifter **1068** is not connected to coaxial cable **1348.**

If the strength of received RF signals falls below a threshold, the controller **1026** controls the RF switches **1300, 1302** so that the RF device **1030** operates with both of the dipole antenna elements **1020, 1022.** An RF interference source **1044** may be causing the RF signals to fall below the threshold, for example.

The controller **1026** controls RF switch **1300** so that coaxial cable **1342** is connected to dipole antenna element **1020** instead of coaxial cable **1340.** The phase shifter **1068** now receives RF signals from dipole antenna element **1020.** The phase shifter **1068** also receives RF signals from dipole antenna element **1022** via coaxial cable **1068.** The phase shifter **1068** may include one or more discrete components, for example. The controller **1026** controls RF switch **902** so that coaxial cable **1346** is connected with coaxial cable **1348,** which is still connected to the RF receiver **1024.**

The controller **1026** is connected to the RF receiver **1024** to determine strength of the received RF signals. A value of the received signal strength may be determined as a signal-to-noise ratio (SNR) or as a received signal strength indicator (RSSI). Based on the strength of the received RF signals, the RF device **1030** will control the RF switches **1300, 1302** accordingly.

Initial operation of the RF device **1030** may be with dipole antenna element **1020,** for example. If the signal strength of the received RF signals drops below an initial threshold, then the controller **1026** controls the RF switches **1302, 1304** so that the RF device **1030** is operating with both of the dipole antenna elements **1020, 1022.**

The controller **1026** may then apply a control loop to orient the frame **1022** to steer the antenna pattern **1100** so that one of the nulls **1102** maintains being directed towards the RF interference source **1044** causing the initial threshold drop. The controller **1026** may be a proportional derivative (PD) controller, for example. An output of the PD controller varies in proportion to the error signal as well as with the derivative of the error signal. An advantage of the PD controller is to increase the stability of orienting the frame **1022** to steer one of the nulls **1102** of the antenna pattern **1100** toward an RF interference source **1044** by improving control since it has the ability to predict future errors.

Another aspect is directed to a method for operating the vehicle **1050**. The method includes operating an RF receiver **1024** coupled to the antenna system **1020,** and operating a controller 1026 to control the propulsion system **1028** to orient the frame **1022** to steer the antenna pattern **1100** based upon the RF receiver **1024.**

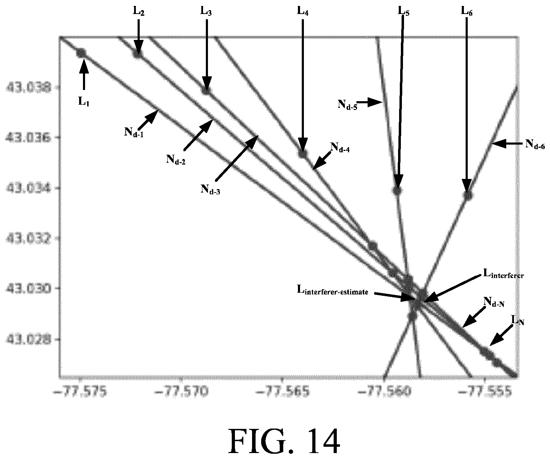

As noted above, the present solution provides a lightweight communication resilient direction finder and geolocation device. This lightweight communication resilient direction finder and geolocation device will now be discussed in relation to FIGS. 14-18. The lightweight communication resilient direction finder and geolocation device may be implemented in or on one or more moving platforms (e.g., aerial vehicle(s)). For example, the lightweight communication resilient direction finder and geolocation device is implemented in arial vehicle **102** of FIG. 1 and/or aerial vehicle **1050** of FIG. 10.

With reference to FIG. 14, the lightweight communication resilient direction finder and geolocation device is generally configured to determine an estimate of the location of an interference source (e.g., signal source **154** of FIG. 1, **1044** of FIG. 10, and/or **1200** of FIG. 12). The interference source's location is referred to as $L_{interferer}$, and is determined using information associated with a plurality of locations of the aerial vehicle. The aerial vehicle's locations are referred to as $L_1, L_2, L_3, L_4, L_5, L_6, ..., L_N$. Any number of aerial vehicle locations can be used to used to determine the estimate of the interference source's location in accordance with a given application. The estimated interference source's location is referred to as $L_{interferer-estimate}$.

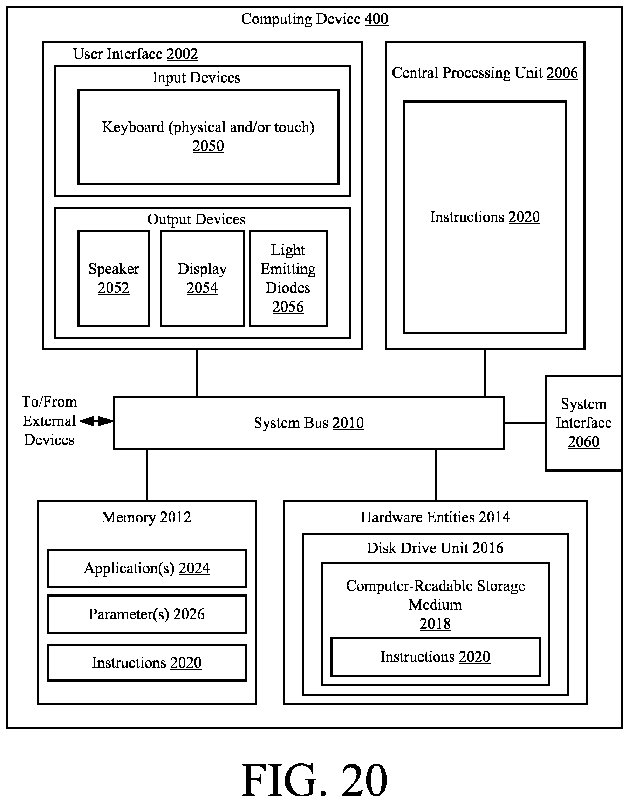

Each aerial vehicle location is detected by a locator (e.g., locator **324** of FIG. 3) of the aerial vehicle. In some scenarios, each aerial vehicle location is defined by GPS coordinates or other location data. GPS coordinates are well known. The GPS coordinates and/or other location data may be stored in a datastore (e.g., memory **2012** of FIG. 20) of the aerial vehicle along with time stamps respectively specifying times when the aerial vehicle locations were detected. For example, first location data (e.g., GPS coordinates) for the aerial vehicle's location $L_1$ is stored so as to be associated with a time $t_1$. Second location data (e.g., GPS coordinates) for the aerial vehicle's location $L_2$ is stored so as to be associated with a time $t_2$, and so on.

Other information may be stored in the datastore of the aerial vehicle. For example, orientation data generated by an IMU (e.g., IMU **330** of FIG. 3 or **1032** of FIG. 10) is also stored along with the same or different time stamps. The orientation data specifies a rotated position of the antenna system's rotatable base (e.g., rotatable base **408** of FIG. 4 or **1062** of FIG. 10) at each detected location of the aerial vehicle. The orientation data is used by a computing device (e.g., computing device **302** of FIG. 3) of the aerial vehicle to obtain directions for nulls (e.g., nulls **502** of FIG. 5 or **1102** of FIG. 11) of the antenna pattern (e.g., antenna pattern **500** of FIG. 5 or **1100** of FIG. 11) associated with each of the detected locations $L_1$-$L_N$. The null directions are referenced by $N_{d-1}, N_{d-2}, N_{d-3}, N_{d-4}, N_{d-5}, N_{d-6}, ..., N_{d-N}$ in FIG. 14. Null direction $N_{d-1}$ is associated with the aerial vehicle's location $L_1$ and time $t_1$. Null direction $N_{d-2}$ is associated with the aerial vehicle's location $L_2$ and time $t_2$, and so on.

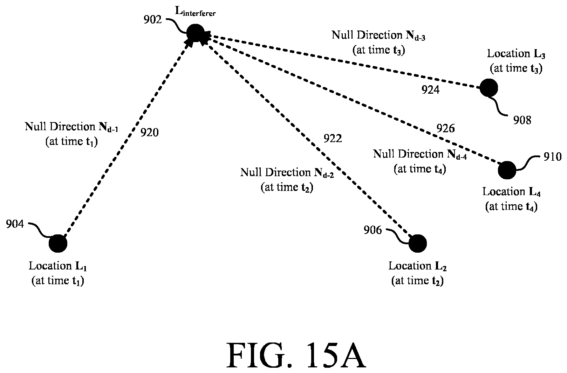

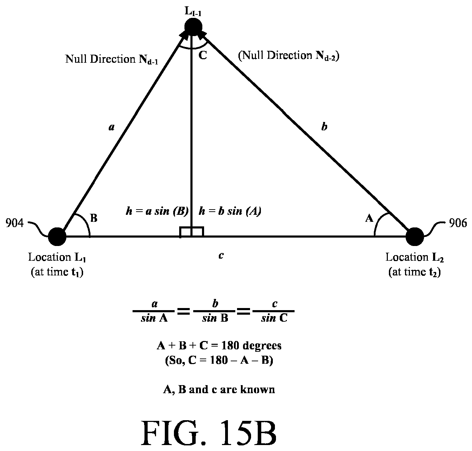

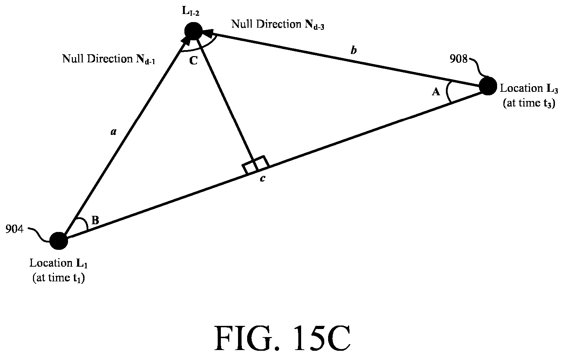

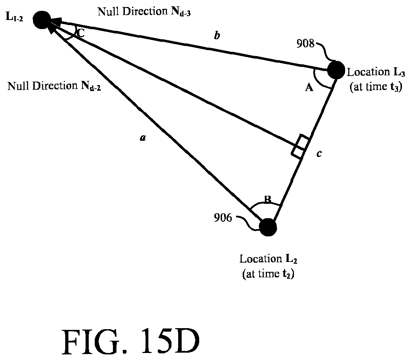

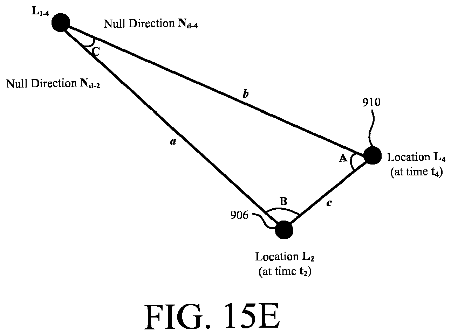

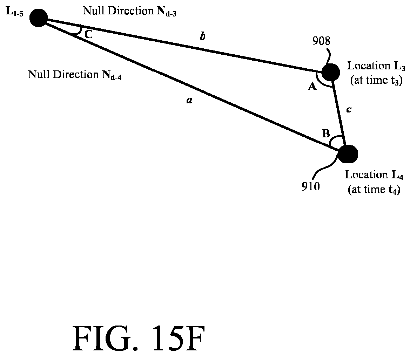

The location data and null directions for one or more moving platforms (e.g., aerial vehicles) are used as inputs to a triangulation based algorithm for obtaining the estimate of the interference source's location $L_{interferer-estimate}$. The triangulation based algorithm will now be discussed in relation to FIG. 15 and in relation to a single moving platform (rather than a net of moving platforms). The following discussion is sufficient for understanding how the present solution could be implemented using a net of moving platforms.

FIG. 15A provides an illustration for a scenario in which there is a single direction finder and geolocation device that is moving within an environment. In this regard, the direction finder and geolocation device may be disposed on or coupled to a mobile platform (e.g., an aerial vehicle such as that discussed above) which is performing RF communication operations. The mobile platform moves: from a first location $L_1$ at a first time $t_1$ shown by dot **904** to a second location $L_2$ at a second time $t_2$ shown by dot **906**; from the second location $L_2$ to a third location $L_3$ at a third time $t_3$ shown by dot **908**; and from the third location $L_3$ to the fourth location $L_4$ at a fourth time $t_4$ shown by dot **910**. At each of the locations, a null of an antenna pattern is steered or otherwise pointed in a direction towards an interference source having a location $L_{interferer}$ shown by dot **902**. The null direction $N_{d-1}$ at time $t_1$ is shown arrow **920**. The null direction $N_{d-2}$ at time $t_2$ is shown arrow **922**. The null direction $N_{d-3}$ at time $t_3$ is shown arrow **924**. The null direction $N_{d-4}$ at time $t_4$ is shown arrow **926**.

An estimate of the interference source's location $L_{interferer-estimate}$ is obtained by performing iterations of the triangulation based algorithm to obtain a plurality of intermediate estimated locations $L_{I-1}, L_{I-2}, ..., L_{I-X}$, where **X** is an integer equal to or greater than one. The intermediate estimated locations are combined to obtain $L_{interferer-estimate}$. The combining operation may be defined by the following mathematical equation (1).

$$L_{\text{interferer-estimate}} = (L_{I\text{-}1} + L_{I\text{-}2} + \ldots + L_{I\text{-}x}) / X \tag{1}$$

Each intermediate location may be weighted to improve the accuracy of $L_{\text{interferer-estimate}}$. In this regard, mathematical equation (1) may be rewritten as mathematical equation (2).

$$L_{\text{interferer-estimate}} = (w_1 \cdot L_{I\text{-}1} + w_2 \cdot L_{I\text{-}2} + \ldots + w_x \cdot L_{I\text{-}x}) / X \tag{2}$$

where $w_1, w_2, \ldots, w_x$ represent weights.

Each intermediate location is determined by considering locations at two times. For example, intermediate location $L_{I\text{-}1}$ may be obtained by considering locations $L_1$ at time $t_1$ and $L_2$ at time $t_2$. Intermediate location $L_{I\text{-}2}$ may be obtained by considering locations $L_1$ at time $t_1$ and location $L_3$ at time $t_3$. Intermediate location $L_{I\text{-}3}$ may be obtained by considering locations $L_2$ at time $t_2$ and location $L_3$ at time $t_3$. $L_{I\text{-}4}$ may be obtained by considering locations $L_2$ at time $t_2$ and location $L_4$ at time $t_4$. $L_{I\text{-}5}$ may be obtained by considering locations $L_3$ at time $t_3$ and location $L_4$ at time $t_4$. So, the estimated location of the interference source may be computed as follows.

$$L_{\text{interferer-estimate}} = (w_1 \cdot L_{I\text{-}1} + w_2 \cdot L_{I\text{-}2} + w_3 \cdot L_{I\text{-}3} + w_4 \cdot L_{I\text{-}4} + w_5 \cdot L_{I\text{-}5}) / 5 \tag{3}$$

The present solution is not limited to the particulars of this example.

The estimated location of the interference source gives situational awareness to the user of the mobile platform and/or users of other external devices. In this regard, the estimated location may be visually, auditorily and/or tactically output from the mobile platform.

Rule(s) may be pre-defined or pre-specified as to which locations and null directions should be used during a given iteration of the triangulation based process for estimating the location of the interference source. For example, during a first iteration of the triangulation based algorithm, the locations $L_1$, $L_2$ and null directions $N_{d\text{-}1}$, $N_{d\text{-}1}$ are to be used to triangulate the location of the interference source. The locations $L_1$, $L_3$ and null directions $N_{d\text{-}1}$, $N_{d\text{-}3}$ are to be used to triangulate the location of the interference source during a second iteration of the triangulation based algorithm. However, the rule prevents the first location $L_1$ from being used in any subsequent iteration of the triangulation based algorithm since a certain amount of time has lapsed since time $t_1$. Additionally or alternatively, the rule or another rule states that data associated with only the most recent $M$ number of locations are to be considered for estimating the location of the interference source. $M$ is any integer equal to or greater than two.

The triangulation based algorithm will now be explained in relation to FIGS. 15B-15F. In 15B, the triangulation based algorithm is used to determine the first intermediate location $L_{I\text{-}1}$ using the locations $L_1$, $L_2$ and null directions $N_{d\text{-}1}$, $N_{d\text{-}2}$. Angles $A$ and $B$ are known, as well as distance $c$. Thus, angle $C$ may be derived from angles $A$ and $B$. The law of signs may then be used to determine distance values $a$ and $b$. The distance values $a$ and $b$ are then applied to the GPS coordinates associated with points **904** and **906** to derive GPS coordinates for location $L_{I\text{-}1}$.

In FIG. 15C, the triangulation based algorithm is used to determine the second intermediate location $L_{I\text{-}2}$ using the locations $L_1$, $L_3$ and null directions $N_{d\text{-}1}$, $N_{d\text{-}3}$. Angles $A$ and $B$ are known, as well as distance $c$. Thus, angle $C$ may be derived from angles $A$ and $B$. The law of signs may then be used to determine distance values $a$ and $b$. The distance values $a$ and $b$ are then applied to the GPS coordinates associated with points **904** and **908** to derive GPS coordinates location $L_{I\text{-}2}$.

In FIG. 15D, the triangulation based algorithm is used to determine the third intermediate location $L_{I\text{-}2}$ using the locations $L_2$, $L_3$ and null directions $N_{d\text{-}2}$, $N_{d\text{-}3}$. Angles $A$ and $B$ are known, as well as distance $c$. Thus, angle $C$ may be derived from angles $A$ and $B$. The law of signs may then be used to determine distance values $a$ and $b$. The distance values $a$ and $b$ are then applied to the GPS coordinates associated with points **906** and **908** to derive GPS coordinates location $L_{I\text{-}3}$.

In FIG. 15E, the triangulation based algorithm is used to determine the fourth intermediate location $L_{I\text{-}4}$ using the locations $L_2$, $L_4$ and null directions $N_{d\text{-}2}$, $N_{d\text{-}4}$. Angles $A$ and $B$ are known, as well as distance $c$. Thus, angle $C$ may be derived from angles $A$ and $B$. The law of signs may then be used to determine distance values $a$ and $b$. The distance values $a$ and $b$ are then applied to the GPS coordinates associated with points **906** and **910** to derive GPS coordinates location $L_{I\text{-}4}$.

In FIG. 15F, the triangulation based algorithm is used to determine the fifth intermediate location $L_{I\text{-}5}$ using the locations $L_3$, $L_4$ and null directions $N_{d\text{-}3}$, $N_{d\text{-}4}$. Angles $A$ and $B$ are known, as well as distance $c$. Thus, angle $C$ may be derived from angles $A$ and $B$. The law of signs may then be used to determine distance values $a$ and $b$. The distance values $a$ and b are then applied to the GPS coordinates associated with points **908** and **910** to derive GPS coordinates location $L_{I\text{-}5}$.

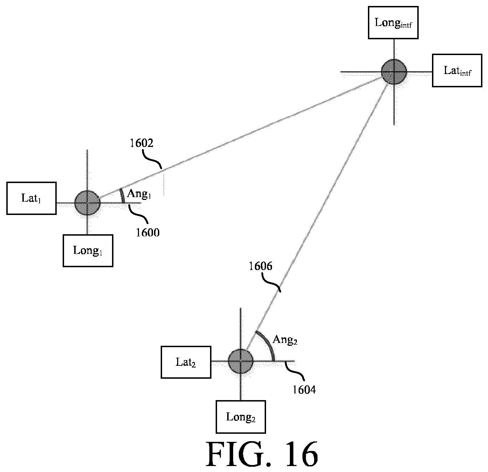

With reference to FIG. 16, the above-described triangulation based algorithm can simplified as shown by the following mathematical equations (4)-(5). Mathematical equation (4) computes a longitude value $Long_{intf}$ for the interference source, while mathematical equation (5) computes a latitude value $Lat_{intf}$ for the interference source.

$$Long_{Intf} = \frac{(Lat_1 - Lat_2) + Long_2 * \tan\left(\frac{2\pi * Ang_2}{360}\right) - Long_1 * \tan\left(\frac{2\pi * Ang_1}{360}\right)}{\tan\left(\frac{2\pi * Ang_2}{360}\right) - \tan\left(\frac{2\pi * Ang_1}{360}\right)} \tag{4}$$

$$Lat_{Intf} = \frac{\left(Lat_1 * \tan\left(\frac{2\pi * Ang_2}{360}\right) - Lat_2 * \tan\left(\frac{2\pi * Ang_1}{360}\right)\right) + (Long_2 - Long_1) * \tan\left(\frac{2\pi * Ang_1}{360}\right) * \tan\left(\frac{2\pi * Ang_2}{360}\right)}{\tan\left(\frac{2\pi * Ang_2}{360}\right) - \tan\left(\frac{2\pi * Ang_1}{360}\right)} \tag{5}$$

where $Lat_1$ represents a latitude of a moving platform at time $t_1$, $Long_1$ represents a longitude of the moving platform at time $t_1$, $Ang_1$ represents an angle between a line **1600** pointing in a reference direction and a line **1602** pointing in the null direction at time $t_1$, $Lat_2$ represents a latitude of the moving platform or another moving platform at time $t_2$, $Long_1$ represents a longitude of the moving platform or another moving platform at time $t_2$, and $Ang_2$ represents an angle between a line **1604** pointing in the reference direction and a line **1606** pointing in the null direction at time $t_2$.

These two values $Long_{intf}$, $Lat_{intf}$ define an estimated location of the interference source. Two or more sets of $Long_{intf}$ and $Lat_{intf}$ are computed and combined together to obtain the final estimated location or position of the interference source. This combination can involve computing a weighted average of the longitude and latitude values. The weighted average represents an estimated position or location of the interference source. The locations may be weighted on (i) a normal distribution code based off the delta between the angles (e.g., angles **A** and **B** in FIG. 15 or angles $Ang_1$ and $Ang_2$ of FIG. 16) associated with the two points, (ii) a linear scale, (iii) a logarithmic scale, and/or (iv) a piecewise scale. A piecewise function could be used in place of a normal distribution curve. The functions within the piecewise function could include, but are not limited to, linear, logarithmic, and/or exponential.

An illustrative normal distribution code is shown in the graph **1700** of FIG. 17. The normal distribution code of graph **1700** is centered at 90 degrees. The present solution is not limited to in this regard. The distribution code can be centered at any degree within the range of 65° to 115° (i.e., 90° ± 25°) and/or any sub-range of this range (e.g., 75° to 100°). Graph **1700** illustrates that if two points have a delta of 90° with one another then a relatively high weight is assigned to the corresponding intermediate location computed for the interference source. If two points have a delta of 180° with another then a relatively low weight is assigned to the corresponding intermediate location computed for the interference source. This weighted approach requires relatively low computing power to provide an accurate estimate of the interference source's location.

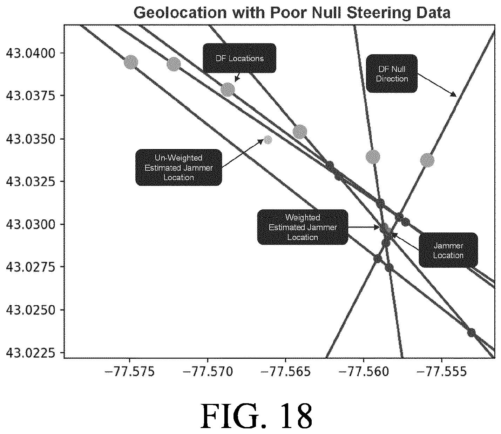

FIG. 18 provides an illustration showing (i) a weighted estimated jammer location relative to the actual jammer location and (ii) an unweighted estimated jammer location relative to the actual jammer location. The weighted estimated jammer location is closer to the actual jammer location, and therefore is considered more accurate than the unweighted estimated jammer location.

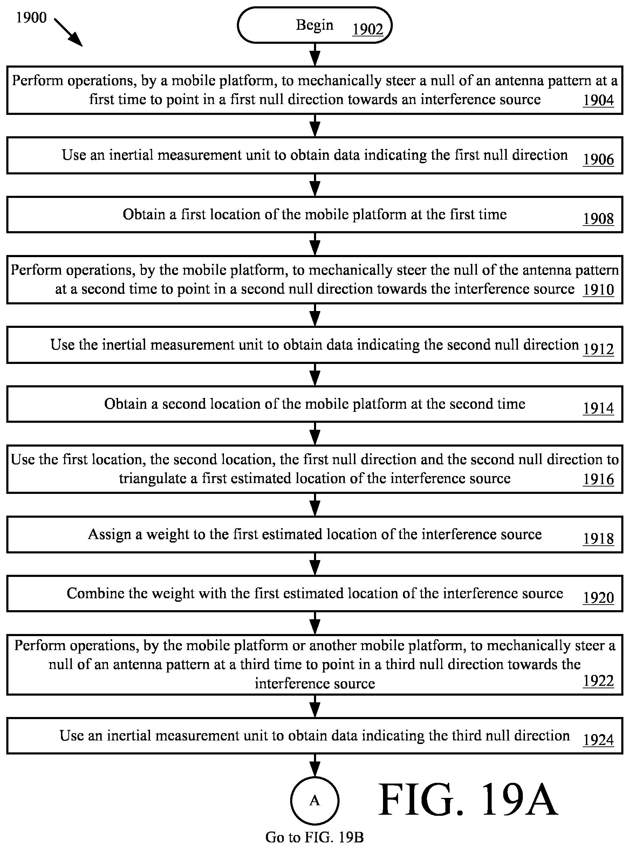

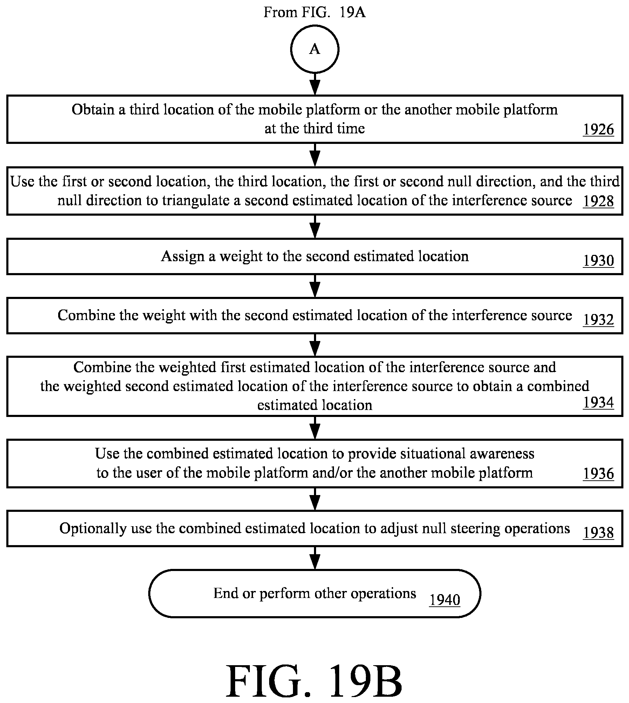

FIG. 19 provides a flow diagram of an illustrative method **1900** for operating a moving platform (e.g., vehicle **102** of FIG. 1, **152** of FIG. 1, and/or **1050** of FIG. 10). Method **1900** begins with **1902** and continues with **1904** where the mobile platform performs operations to mechanically steer a null of an antenna pattern at a first time to point in a first null direction towards an interference source (e.g., **154** of FIG. 1 or **1044** of FIG. 10). The mechanical steering can be achieved by, for example, actuating motors and/or gears to rotate the mobile platform and/or rotate a base (e.g., base **408** of FIG. 4 or **1062** of FIG. 10) of the mobile platform on which antenna elements (e.g., antenna elements **420, 422** of FIG. 5 or **1020, 1022** of FIG. 10) are disposed.

An IMU (e.g., IMU **330** of FIG. 3 or **1032** of FIG. 10) is used in block **1906** to obtain data indicating the first null direction. For example, this data can indicate (i) an angle between a reference line and the pointing direction of the null, (ii) an angle between a reference point on the mobile platform and the degree to which the base has been rotated from the reference point, and/or (iii) the direction that the base has been rotated (e.g., to the left or the right, or clockwise or counterclockwise). It should be noted that the IMU is disposed on the mobile platform and/or base that is rotated to steer the null in a direction of the interference source.

A location of the first mobile platform at the first time is obtained in block **1908**. The location can be obtained via a locator (e.g., locator **324** of FIG. 3) of the moving platform. The locator can include, but is not limited to, a GPS location device.

In block **1910**, the mobile platform performs operations to steer the null of the antenna pattern at a second time to point in a second null direction towards the interference source. The second direction is different than the first direction. This steering may be achieved in the same manner as that of block **1904**. The IMU is used in block **1912** to obtain data indicating the second null direction. A second location of the mobile platform at the second time is obtained in block **1914**.

In block **1916**, the first location, the second location, the first null direction and the second null direction are used to triangulate a first estimated location of the interference source. A weight is assigned to the first estimated location of the interference source as shown by block **1918**. The weight may be assigned using a normal distribution curve, a linear scale, or a logarithmic scale. The weight assignment may be based on a delta between angles of two points respectively associated with the first and second locations of the mobile platform. The assigned weight is combined in block **1920** with the first estimated location of the interference source. For example, the first estimated location of the interference source may be multiplied by the assigned weight. The present solution is not limited in this regard.

In block **1922,** the mobile platform or another mobile platform performs operations to mechanically steer a null of an antenna pattern at a third time to point in a third null direction towards the interference source. An IMU is used in block **1924** to obtain data indicating a third null direction. Subsequently, method **1900** continues to block **1926** of FIG. 19B.

As shown in FIG. 19B, block **1926** involves obtaining a third location of the mobile platform or the another mobile platform at the third time. The first or second location, the third location, the first or second null direction, and the third null direction are used in block **1928** to triangulate a second estimated location of the interference source. A weight is assigned to the second estimated location of the interference source in block **1930.** The weight may be assigned using a normal distribution curve, a linear scale, or a logarithmic scale. The weight assignment may be based on a delta between angles of two points respectively associated with the first or second location and the third location of the mobile platform. The assigned weight is combined in block **1932** with the second estimated location of the interference source. For example, the second estimated location of the interference source may be multiplied by the assigned weight. The present solution is not limited in this regard.

In block **1934,** the weighted first estimated location of the interference source is combined with the weighted second estimated location of the interference source to obtain a combined estimated location. The combined estimated location can include, but is not limited to, an average of the weighted first and second estimated locations of the interference source. Next in block **1936,** the combined estimated location is used to provide situational awareness to the user of the mobile platform and/or the another mobile platform. For example, the combined estimated location may be (i) output from the mobile platform(s) visually, auditorily and/or tactically and/or (ii) output from another device (e.g., ground or remote control station(s) **110** of FIG. 1, server **118** of FIG. 1, and/or communication unit(s) **104** of FIG. 1) visually, auditorily and/or tactically. The present solution is not limited to the particulars of this example.

The combined estimated location may optionally be used in block **1938** to adjust null steering operations of the mobile platform(s). For example, one or more null steering parameters may be changed to more accurately point null(s) of antenna pattern(s) in the direction(s) of interference source(s).

Upon completing the operations of block **1936** or **1938,** method **1900** continues to block **1940** where it ends or other operations are performed.

Referring now to FIG. 20, there is shown an illustrative architecture for a computing device **2000.** The ground control station **110** of FIG. 1, server **118** of FIG. 1, computing device(s) **122** of FIG. 1, computing device **302** of FIG. 3, controller **404** of FIG. 4 and/or controller **1026** of FIG. 10 is/are the same as or similar to computing device **2000.** As such, the discussion of computing device **2000** is sufficient for understanding the components **110, 118, 122** of FIG. 1, computing device **302** of FIG. 3, controller **404** of FIG. 4, and/or controller **1026** of FIG. 10.

Computing device **2000** may include more or less components than those shown in FIG. 20. However, the components shown are sufficient to disclose an illustrative solution implementing the present solution. The hardware architecture of FIG. 20 represents one implementation of a representative computing device configured to receive information, process the receive information, transmit information and/or control operations of an aerial vehicle, as described herein. As such, the computing device **2000** of FIG. 20 implements at least a portion of the method(s) described herein.

Some or all components of the computing device **2000** can be implemented as hardware, software and/or a combination of hardware and software. The hardware includes, but is not limited to, one or more electronic circuits. The electronic circuits can include, but are not limited to, passive components (e.g., resistors and capacitors) and/or active components (e.g., amplifiers and/or microprocessors). The passive and/or active components can be adapted to, arranged to and/or programmed to perform one or more of the methodologies, procedures, or functions described herein.

As shown in FIG. 20, the computing device **2000** comprises a user interface **2002,** a Central Processing Unit (CPU) **2006,** a system bus **2010,** a memory **2012** connected to and accessible by other portions of computing device **2000** through system bus **2010,** a system interface **2060,** and hardware entities **2014** connected to system bus **2010.** The user interface can include input devices and output devices, which facilitate user-software interactions for controlling operations of the computing device **2000.** The input devices include, but are not limited to, a physical and/or touch keyboard **2050.** The input devices can be connected to the computing device **2000** via a wired or wireless connection (e.g., a Bluetooth® connection). The output devices include, but are not limited to, a speaker **2052,** a display **2054,** and/or light emitting diodes **2056.** System interface **2060** is configured to facilitate wired or wireless communications to and from external devices (e.g., network nodes such as access points, etc.).

At least some of the hardware entities **2014** perform actions involving access to and use of memory **2012,** which can be a Random Access Memory (RAM), a disk drive, flash memory, a Compact Disc Read Only Memory (CD-ROM) and/or another hardware device that is capable of storing instructions and data. Hardware entities **2014** can include a disk drive unit **2016** comprising a computer-readable storage medium **2018** on which is stored one or more sets of instructions **2020** (e.g., software code) configured to implement one or more of the methodologies, procedures, or functions described herein. The instructions **2020** can also reside, completely or at least partially, within the memory **2012** and/or within the CPU **2006** during execution thereof by the computing device **2000**. The memory **2012** and the CPU **2006** also can constitute machine-readable media. The term "machine-readable media", as used here, refers to a single medium or multiple media (e.g., a centralized or distributed database, and/or associated caches and servers) that store the one or more sets of instructions **2020**. The term "machine-readable media", as used here, also refers to any medium that is capable of storing, encoding or carrying a set of instructions **2020** for execution by the computing device **2000** and that cause the computing device **2000** to perform any one or more of the methodologies of the present disclosure.

The described features, advantages and characteristics disclosed herein may be combined in any suitable manner. One skilled in the relevant art will recognize, in light of the description herein, that the disclosed systems and/or methods can be practiced without one or more of the specific features. In other instances, additional features and advantages may be recognized in certain scenarios that may not be present in all instances.

In view of the forgoing discussion, the present solution concerns a method for operating a direction finder and/or geolocation device. The method comprises: mechanically steering an antenna system of a first platform (which may be a mobile platform) at a first time such that a null of a first antenna pattern points in a first null direction towards an interference source; obtaining a first location of the first platform at the first time; mechanically steering the antenna system of the first platform at a second time such that the null of the first antenna pattern points in a second null direction towards the interference source, wherein the second direction is different than the first direction; obtaining a second location of the first platform at the second time, wherein the second location is different than the first location; and using the first location, the second location, the first null direction and the second null direction to determine or triangulate a first estimated location of the interference source.

The method may also comprise: using an inertial measurement unit to obtain the first null direction and the second null direction (wherein the inertial measurement unit is disposed on a movable base configured to facilitate mechanical steering of the null in a plurality of directions); assigning a weight to the first estimated location; and/or combining the weight with the first estimated location of the interference source. The weight may be assigned using a normal distribution curve, a linear scale, or a logarithmic scale. The weight may be assigned based on a delta between angles of two points respectively associated with the first and second locations of the first platform.

The methods may also comprises: mechanically steering the antenna system of the first platform at a third time such that the null of the first antenna pattern points in a third null direction towards the interference source; obtaining a third location of the first platform at the third time; using the first or second location, the third location, the first or second null direction, and the third null direction to determine or triangulate a second estimated location of the interference source; combining the first estimated location and the second estimated location to obtain a combined estimated location; and/or selectively eliminating the first location and the first null direction from subsequent consideration when re-estimating a location of the interference source. A first weight may be assigned to the first estimated location based on a delta between angles of two points respectively associated with the first and second locations of the first platform. A second weight may be assigned to the second estimated location based on a delta between angles of a point associated with the first or second location and a point associated with the third location. The combined estimated location may comprise a weighted average of the first and second estimated locations computed using the first and second weights.

The present solution also concerns a direction finder and/or geolocation device, comprising: a platform (which may be a mobile platform) with an antenna system; and an electronic circuit disposed on or in the platform. The electronic circuit is configured to: mechanically steer the antenna system at a first time such that a null of a first antenna pattern points in a first null direction towards an interference source; obtain a first location of the platform at the first time; mechanically steer the antenna system at a second time such that the null of the first antenna pattern points in a second null direction towards the interference source, wherein the second direction is different than the first direction; obtain a second location of the platform at the second time, wherein the second location is different than the first location; and use the first location, the second location, the first null direction and the second null direction to determine or triangulate a first estimated location of the interference source. The direction finder and/or geolocation device may also comprise an inertial measurement unit configured to obtain the first null direction and the second null direction, wherein the inertial measurement unit is disposed on the platform or a rotatable base of the platform that is provided to facilitate mechanical steering of the null in a plurality of directions.

The electronic circuit may be further configured to: assign a weight to the first estimated location; and combine the weight with the first estimated location of the interference source. The weight may be assigned using a normal distribution curve, a linear scale, or a logarithmic scale. The weight may be assigned based on a delta between angles of two points respectively associated with the first and second locations of the platform.

The electronic circuit may be further configured to: mechanically steer the antenna system at a third time such that the null of the first antenna pattern points in a third null direction towards the interference source; obtain a third location of the platform at the third time; use the first or second location, the third location, the first or second null direction, and the third null direction to determine or triangulate a second estimated location of the interference source; combine the first estimated location and the second estimated location to obtain a combined estimated location; and/or selectively eliminate the first location and the first null direction from subsequent consideration when re-estimating a location of the interference source. A first weight to the first estimated location based on a delta between angles of two points respectively associated with the first and second locations of the platform. A second weight to the second estimated location based on a delta between angles of a point associated with the first or second location and a point associated with the third location. The combined estimated location may comprise a weighted average of the first and second estimated locations computed using the first and second weights.

The present solution also comprises an aerial vehicle. The aerial vehicle comprises: a fuselage; and avionic electronics that are disposed in the fuselage and comprise an electronic circuit. The electronic circuit is configured to: control a mechanical steering of a null of a first antenna pattern at a first time to point in a first null direction towards an interference source; obtain a first location of the aerial vehicle at the first time; control a mechanical steering of the null of the first antenna pattern at a second time to point in a second null direction towards the interference source, wherein the second direction is different than the first direction; obtain a second location of the aerial vehicle at the second time (wherein the second location is different than the first location); and use the first location, the second location, the first null direction and the second null direction to determine or triangulate a first estimated location of the interference source.

As used in this document, the singular form "a", "an", and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to".

Although the systems and methods have been illustrated and described with respect to one or more implementations, equivalent alterations and modifications will occur to others skilled in the art upon the reading and understanding of this specification and the annexed drawings. In addition, while a particular feature may have been disclosed with respect to only one of several implementations, such feature may be combined with one or more other features of the other implementations as may be desired and advantageous for any given or particular application. Thus, the breadth and scope of the disclosure herein should not be limited by any of the above descriptions. Rather, the scope of the invention should be defined in accordance with the following claims and their equivalents.

**Claims**

1. A method for operating a direction finder device, comprising:

   mechanically steering an antenna system of a first platform at a first time such that a null of a first antenna pattern points in a first null direction towards an interference source;
   obtaining a first location of the first platform at the first time;
   mechanically steering the antenna system of the first platform at a second time such that the null of the first antenna pattern points in a second null direction towards the interference source, wherein the second direction is different than the first direction;
   obtaining a second location of the first platform at the second time, wherein the second location is different than the first location; and
   using the first location, the second location, the first null direction and the second null direction to determine a first estimated location of the interference source.

2. The method according to claim 1, further comprising using an inertial measurement unit to obtain the first null direction and the second null direction, wherein the inertial measurement unit is disposed on a movable base configured to facilitate mechanical steering of the null in a plurality of directions.

3. The method according to claim 2, further comprising:

   assigning a weight to the first estimated location; and
   combining the weight with the first estimated location of the interference source.

4. The method according to claim 3, wherein the weight is assigned using a normal distribution curve, a linear scale, or a logarithmic scale; and/or
   wherein the assigning is based on a delta between angles of two points respectively associated with the first and second locations of the first platform.

5. The method according to claim 1, further comprising:

mechanically steering the antenna system of the first platform at a third time such that the null of the first antenna pattern points in a third null direction towards the interference source;
obtaining a third location of the first platform at the third time; and

using the first or second location, the third location, the first or second null direction, and the third null direction to determine a second estimated location of the interference source; and/or
further comprising selectively eliminating the first location and the first null direction from subsequent consideration when re-estimating a location of the interference source.

6. The method according to claim 5, further comprising combining the first estimated location and the second estimated location to obtain a combined estimated location; and/or further comprising:

assigning a first weight to the first estimated location based on a delta between angles of two points respectively associated with the first and second locations of the first platform; and
assigning a second weight to the second estimated location based on a delta between angles of a point associated with the first or second location and a point associated with the third location.

7. The method according to claim 6, wherein the combined estimated location comprises a weighted average of the first and second estimated locations computed using the first and second weights.

8. A direction finder device, comprising:

a platform with an antenna system; and
an electronic circuit disposed on or in the platform that is configured to:

mechanically steer the antenna system at a first time such that a null of a first antenna pattern points in a first null direction towards an interference source;
obtain a first location of the platform at the first time;
mechanically steer the antenna system at a second time such that the null of the first antenna pattern points in a second null direction towards the interference source, wherein the second direction is different than the first direction;
obtain a second location of the platform at the second time, wherein the second location is different than the first location; and
use the first location, the second location, the first null direction and the second null direction to determine a first estimated location of the interference source.

9. The direction finder device according to claim 8, further comprising an inertial measurement unit configured to obtain the first null direction and the second null direction, wherein the inertial measurement unit is disposed on the platform or a rotatable base of the platform that is provided to facilitate mechanical steering of the null in a plurality of directions.

10. The direction finder device according to claim 9, wherein the electronic circuit is further configured to:

assign a weight to the first estimated location; and
combine the weight with the first estimated location of the interference source.

11. The direction finder device according to claim 10, wherein the weight is assigned using a normal distribution curve, a linear scale, or a logarithmic scale; and/or
wherein the weight is assigned based on a delta between angles of two points respectively associated with the first and second locations of the platform.

12. The direction finder device according to claim 8, wherein the electronic circuit is further configured to:

mechanically steer the antenna system at a third time such that the null of the first antenna pattern points in a third null direction towards the interference source;
obtain a third location of the platform at the third time; and
use the first or second location, the third location, the first or second null direction, and the third null direction to determine a second estimated location of the interference source; and/or wherein the electronic circuit is further configured to selectively eliminate the first location and the first null direction from subsequent consideration when re-estimating a location of the interference source.

13. The direction finder device according to claim 12, wherein the electronic circuit is further configured to combine the first estimated location and the second estimated location to obtain a combined estimated location; and/or wherein the electronic circuit is further configured to:

assign a first weight to the first estimated location based on a delta between angles of two points respectively associated with the first and second locations of the platform; and
assign a second weight to the second estimated location based on a delta between angles of a point associated with the first or second location and a point associated with the third location.

14. The direction finder device according to claim 13, wherein the combined estimated location comprises a weighted average of the first and second estimated locations computed using the first and second weights.

15. An aerial vehicle, comprising:

a fuselage; and
avionic electronics that are disposed in the fuselage and comprise an electronic circuit configured to:

control a mechanical steering of a null of a first antenna pattern at a first time to point in a first null direction towards an interference source;
obtain a first location of the aerial vehicle at the first time;
control a mechanical steering of the null of the first antenna pattern at a second time to point in a second null direction towards the interference source, wherein the second direction is different than the first direction;
obtain a second location of the aerial vehicle at the second time, wherein the second location is different than the first location; and
use the first location, the second location, the first null direction and the second null direction to determine a first estimated location of the interference source.

FIG. 1

Aerial Vehicle
102

Communication Relay
126

204

208

128

Fuselage
202

# FIG. 2

FIG. 3

314

314

**Frame 412**

**RF Device 400**

**Antenna System 320**

Housing
**414**

Antenna
Element
420

Antenna
Element
422

IMU
**330**

Rotatable Base **408**

Actuator **406**

Phase Shifter **410**

RF Receiver **402**

Controller **404**

# FIG. 4

FIG. 5

FIG. 6

FIG. 7

FIG. 8

400

420

422

IMU
330

Rotatable Base 408

Actuator
406

302

900

906

912

908

904

902

RF Receiver
402

910

410

# FIG. 9

EP 4 707 844 A1

FIG. 10

25

FIG. 11

FIG. 12

FIG. 13

FIG. 14

$L_{interferer}$

902

Null Direction $N_{d-3}$
(at time $t_3$)

Location $L_3$
(at time $t_3$)

924

908

Null Direction $N_{d-1}$
(at time $t_1$)

920

926

910

922

Null Direction $N_{d-4}$
(at time $t_4$)

Null Direction $N_{d-2}$
(at time $t_2$)

Location $L_4$
(at time $t_4$)

904

906

Location $L_1$
(at time $t_1$)

Location $L_2$
(at time $t_2$)

# FIG. 15A

$$\frac{a}{sin\ A} = \frac{b}{sin\ B} = \frac{c}{sin\ C}$$

**A + B + C = 180 degrees**
**(So, C = 180 − A − B)**

**A, B and c are known**

# FIG. 15B

Null Direction $N_{d-3}$

$L_{I-2}$

Null Direction $N_{d-1}$

C

908

Location $L_3$
(at time $t_3$)

A

b

a

c

B

904

Location $L_1$
(at time $t_1$)

# FIG. 15C

FIG. 15D

$L_{1-4}$

Null Direction $N_{d-4}$

C

Null Direction $N_{d-2}$

b

910

a

A

Location $L_4$
(at time $t_4$)

B

c

906

Location $L_2$
(at time $t_2$)

# FIG. 15E

FIG. 15F

FIG. 16

FIG. 17

FIG. 18

1900

Begin    1902

Perform operations, by a mobile platform, to mechanically steer a null of an antenna pattern at a first time to point in a first null direction towards an interference source    1904

Use an inertial measurement unit to obtain data indicating the first null direction    1906

Obtain a first location of the mobile platform at the first time    1908

Perform operations, by the mobile platform, to mechanically steer the null of the antenna pattern at a second time to point in a second null direction towards the interference source    1910

Use the inertial measurement unit to obtain data indicating the second null direction    1912

Obtain a second location of the mobile platform at the second time    1914

Use the first location, the second location, the first null direction and the second null direction to triangulate a first estimated location of the interference source    1916

Assign a weight to the first estimated location of the interference source    1918

Combine the weight with the first estimated location of the interference source    1920

Perform operations, by the mobile platform or another mobile platform, to mechanically steer a null of an antenna pattern at a third time to point in a third null direction towards the interference source    1922

Use an inertial measurement unit to obtain data indicating the third null direction    1924

A

# FIG. 19A

Go to FIG. 19B

From FIG. 19A

( A )

Obtain a third location of the mobile platform or the another mobile platform
at the third time                                                    1926

Use the first or second location, the third location, the first or second null direction, and the third
null direction to triangulate a second estimated location of the interference source   1928

Assign a weight to the second estimated location                      1930

Combine the weight with the second estimated location of the interference source   1932

Combine the weighted first estimated location of the interference source and
the weighted second estimated location of the interference source to obtain a combined
estimated location                                      1934

Use the combined estimated location to provide situational awareness
to the user of the mobile platform and/or the another mobile platform      1936

Optionally use the combined estimated location to adjust null steering operations   1938

( End or perform other operations   1940 )

# FIG. 19B

**FIG. 20**

Computing Device 400

User Interface 2002

Input Devices

Keyboard (physical and/or touch)
2050

Output Devices

Speaker 2052 | Display 2054 | Light Emitting Diodes 2056

Central Processing Unit 2006

Instructions 2020

To/From External Devices

System Bus 2010

System Interface 2060

Memory 2012

Application(s) 2024

Parameter(s) 2026

Instructions 2020

Hardware Entities 2014

Disk Drive Unit 2016

Computer-Readable Storage Medium 2018

Instructions 2020

**EUROPEAN SEARCH REPORT**

Application Number

EP 25 18 5888

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/314621 A1 (JOHNSTON IVAN L [US] ET AL) 5 October 2023 (2023-10-05) * the whole document * | 1-15 | INV. G01S3/04 G01S5/02 G01S5/04 |
| X | US 6 839 017 B1 (DILLMAN DAVID J [US]) 4 January 2005 (2005-01-04) * the whole document * | 1-15 | |
| A | US 7 515 916 B1 (ALEXANDER THOMAS [US]) 7 April 2009 (2009-04-07) * column 20, lines 44-54 * | 1,8,15 | |
| A | US 2003/125138 A1 (JOHN EUGENE BRITTO [US] ET AL) 3 July 2003 (2003-07-03) * paragraph [0011] * | 1,8,15 | |
| A | US 2016/061928 A1 (HARRIMAN ADAM [US]) 3 March 2016 (2016-03-03) * paragraph [0052] * | 1,8,15 | |

TECHNICAL FIELDS
SEARCHED (IPC)

G01S

The present search report has been drawn up for all claims

| Place of search | Date of completion of the search | Examiner |
|---|---|---|
| Munich | 3 December 2025 | Krummenacker, Benoît |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 5888

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2025

| Patent document cited in search report | | Publication date | Patent family member(s) | | Publication date |
|---|---|---|---|---|---|
| US 2023314621 | A1 | 05-10-2023 | NONE | | |
| US 6839017 | B1 | 04-01-2005 | NONE | | |
| US 7515916 | B1 | 07-04-2009 | NONE | | |
| US 2003125138 | A1 | 03-07-2003 | NONE | | |
| US 2016061928 | A1 | 03-03-2016 | US 2013016011 A1 | | 17-01-2013 |
| | | | US 2016061928 A1 | | 03-03-2016 |

EPO FORM P0459

For more details about this annex : see Official Journal of the European Patent Office, No. 12/82